# EUROPEAN PATENT SPECIFICATION

(11) **EP 4 696 881 B1**
(45) Date of publication and mention of the grant of the patent: **04.11.2026**
(21) Application number: 24194717.5
(22) Date of filing: 15.08.2024
(51) Int. Cl.: F03B 13/18

(54) **WAVE POWER FACILITY**
WELLENENERGIEANLAGE
INSTALLATION HOULOMOTRICE

(43) Date of publication of application: 18.02.2026
(73) Proprietor: Hurricane Innovation AS, 5430 Bremnes (NO)
(72) Inventor: Hollund, Svein Tore, 5430 Bremnes (NO)
(74) Representative: Bryn Aarflot AS

(56) References cited:
- CN-U- 203 756 429
- FR-A- 475 834
- NO-B1- 347 990
- US-A- 5 411 377

## Description

### Technical Field

The present invention relates to a wave power facility which is adaptable to various conditions. In particular, the wave units of the wave power facility are adaptable to the wave and wind conditions, as their buoyancy and vertical elevation can be adjusted according to weather conditions.

### Background Art

Several wave power facility designs are known, where the wave units are suspended with a line or cable between an elevated location and the seabed. Power is harvested as the wave units are moved by the waves. Harvesting can typically be done by rotation of a generator that is connected to the line or cable.

For instance, publication FR475834A discloses a facility that has a support structure resting on the seabed. Harvest lines extend between an anchor at the seabed and a sheave at an upper part of the support structure. In some embodiments, the wave units are guided along guide lines that extend between the seabed and the support structure.

To ensure high power output in normal weather conditions, the reciprocating wave units need to be large, such that they generate large forces. However, this makes them vulnerable when weather conditions are harsh, with large powerful waves and gusts of wind.

Furthermore, wave conditions vary, both in frequency and height. Hence, it is desirable to adapt the wave units to the prevailing conditions to obtain a highest possible power output.

This disclosure presents a wave power facility that meets the above desire and solves the above challenge.

### Summary of invention

There is disclosed a wave power facility comprising a support structure installed on the seabed, a top structure supported by the support structure, and a plurality of wave units arranged at the sea surface. The wave units are supported by harvest lines extending between the top structure and the seabed. Each of the respective wave units comprises a buoyancy part. According to the present disclosure, each buoyancy part is interchangeable between a compressed state and an expanded state.

The top structure can be part of the support structure.

The buoyancy part can comprise a first part and a second part, wherein at least a portion of the first part and the second part have a cylindrical portion. The first or second part is slidably arranged inside the second or first part, respectively. Hence, the first and second parts are mutually movable in a telescopic manner.

The cylindrical portion can have a circular or polygonal cross section, such as a square or rectangular cross section.

In addition to said first part and second part, there could in some embodiments be even further parts. For instance, three or four parts (i.e. an additional third and a fourth part) can be arranged in a telescoping manner.

In some embodiments, the respective wave units can further comprise a support cage that encompasses at least a portion of the buoyancy part. Advantageously, the support cage can be in the form of a framework that can typically comprise beams, struts, or rods or similar elements.

The respective wave units can comprise an adjustment arrangement with an adjustment motor. With the adjustment motor, the operator is enabled to adjust the volume inside the buoyancy part of the wave unit.

In some embodiments, the first part can comprise a utility compartment at an upper portion. The adjustment motor can be arranged inside the utility compartment, and the adjustment motor can drive, typically rotate, one or more threaded rods that interface with the second part with a threaded engagement. In this manner, by moving the threaded rods, such as rotating them, the operator can adjust the volume of the buoyancy part.

The support cage can in some embodiments comprise guide members against which the second part abuts in a sliding manner.

In some embodiments, the respective wave units can have an air pump with fluid connection to a first compartment inside the wave unit. In this manner, the operator can control the amount of air inside the buoyancy part, and hence the amount of water. Hence, the operator can control the buoyancy of the wave unit by operation of the air pump.

The second part can comprise an opening that communicates with the exterior of the second part. This allows moving water into and out of the buoyancy part of the wave unit.

The respective wave units can comprise a ventilation valve that is in fluid communication with the exterior and interior of the buoyancy part of the wave unit. In this manner, the operator can fill the buoyancy part with water by lowering it into the sea when having the ventilation valve open.

Also disclosed herein is a method of adjusting the characteristics of the buoyancy part of a wave power facility such as the wave power facility disclosed above. The method comprises
i) with an adjustment motor, moving a second part of the buoyancy part telescopically with respect to a first part of the buoyancy part, thereby adjusting the volume of the buoyancy part; and/or
ii) with an air pump, which is part of the wave unit, adjusting the amount of water inside the buoyancy part, by displacing water with air or by displacing air with water.

Also disclosed is a method of protecting a wave unit of a wave power facility as disclosed above from excessive wave forces, the method comprises at least one of the following steps:
a) with an air pump that is part of the wave unit, reducing the buoyancy of the wave unit by pumping air out from a buoyancy part and thereby allowing water to flow into the buoyancy part and, by moving the harvest line, moving the wave unit downwards to a distance below the sea level;
b) opening a ventilation valve to allow water to flow into the buoyancy part through an opening and, by moving the harvest line, moving the wave unit downwards to a distance below the sea level;
c) with an air pump that is part of the wave unit, increasing the buoyancy of the wave unit by pumping air into a buoyancy part and thereby displacing water out of the buoyancy part and, by moving the harvest line, moving the wave unit upwards to a distance above the sea level;
d) opening a ventilation valve to allow water to flow out of the buoyancy part through an opening and, by moving the harvest line, moving the wave unit upwards to a distance above the sea level.

In this manner, the operator can move the wave units down into the sea, below the waves, or above the sea, above the waves, where they will be protected from the forces from the waves.

Another way of protecting the wave units is to elevate them above the level of the waves. To do this, water can be drained from the wave units. This can be done by opening a ventilation valve and then lifting the wave unit. Water will then flow out of the buoyancy part of the wave unit, through an opening in the lower portion of the buoyancy part.

Movement of the harvest line can for instance be performed by rotating a sheave with a motor, such as at the top structure of the wave power facility.

### Detailed description of the invention

While various features have been discussed in general terms above, a more detailed and non-limiting example of embodiment will be discussed in the following with reference to the drawings, in which
- Fig. 1: is a schematic illustration of a wave power facility having several wave units and installed on the seabed;
- Fig. 2: is a schematic view of a wave unit, with a buoyancy part arranged inside a support cage;
- Fig. 3: is a schematic view of the buoyancy part shown in fig. 3, without the support cage;
- Fig. 4: is a cross-section view of the buoyancy part when in an expanded mode;
- Fig. 5: is the same cross-section view as in Fig. 4, however when in a compressed mode; and
- Fig. 6: is a schematic top view of a second part of the buoyancy part arranged inside the support cage.

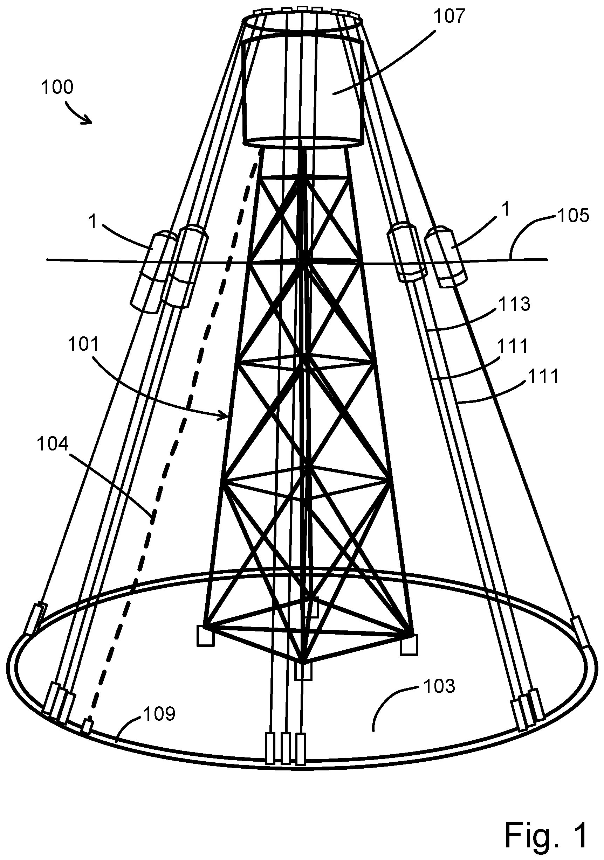

Fig. 1 depicts a wave power facility 100 installed at sea. It comprises a support structure 101 installed on the seabed 103. Above the sea surface 105, it comprises a top structure 107 and on the seabed 103 it comprises an anchoring structure 109.

A plurality of lines, in the form of guide lines 111 and harvest lines 113 extend between the seabed 103 and the top structure 107. On the seabed, they are connected to the anchoring structure 109.

At the sea surface 105 the wave power facility 100 further comprises a plurality of wave units 1. The wave units 1 are held in their orientation, which in the shown embodiment is substantially vertical, by means of the harvest lines 113. Furthermore, they are slidably attached to the guide lines 111, such that they can move along the guide lines 111 as they are being moved by the ocean waves.

To harvest energy, one or more electric generators (not shown) are installed in the top structure 107. The electric generators are driven by the harvest lines 113, which move with the vertical movement of the wave units 1. Furthermore, the guide lines 111 are advantageously also connected to one or more generators, such that forces from the horizontal movement of the wave units 1 can be converted to electric power. This topic will not be discussed further herein. It is, however, discussed in Norwegian patent application NO20230111.

Still referring to Fig. 1, a chain 104 is shown extending from the seabed 103 to an upper part of the support structure 101. While only one chain 104 is shown in Fig. 1, a plurality, such as three, four or even more chains 104 will typically be used. The chains 104 will limit the horizontal movement of the upper part of the support structure 101, including the top structure 107. Such movements can result from wind acting on the top structure 107 and from waves exerting forces on the wave units 1. As a skilled person will realize, excessive movements of the upper part of the support structure 101 could result in excessive tension in the guide lines 111, while also affecting the movements of the harvest lines 113.

While the shown chain 104 is anchored in the anchoring structure 109, the chains 104 could instead be separately anchored, such as with separate suction anchors (not shown).

As can be seen in Fig. 1, the wave units 1 on the left-hand side of the support structure 101 are larger than the wave units 1 on the right-hand side. This is because the wave units 1 on the right-hand side have been compressed, such that their volume and overall size are reduced. Reducing the size of the wave units 1 is typically done when the weather conditions are rough. In this manner, power production can proceed while still protecting the wave power facility 100 against excessive forces from the waves.

The following discussion will relate to the wave units 1.

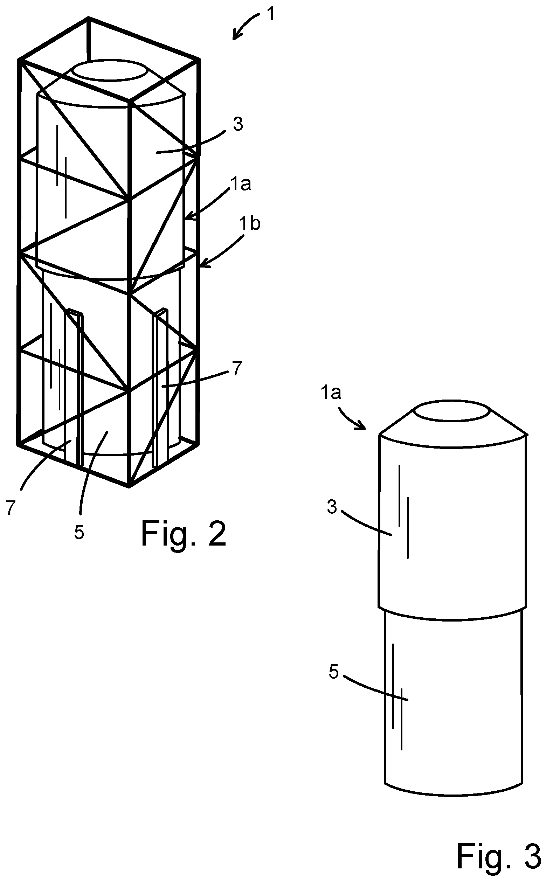

Fig. 2 depicts a wave unit 1 with a schematic, perspective view. It comprises a buoyancy part 1a and a support cage 1b. The buoyancy part 1a is arranged inside the support cage 1b, which in the shown embodiment is designed as a framework. The support cage 1b was omitted in Fig. 1 for illustrational purpose. However, embodiments may exist without the support cage 1b.

The buoyancy part 1a is in the shown embodiment cylindrical with a circular cross section. It comprises a first part 3 and a second part 5. Both the first and second parts 3, 5 are cylindrical. The second part 5 can be moved axially with respect to the first part 3, within the first part 3 in a telescopic fashion.

The first part 3 is fixed to the support cage 1b, while the second part 5 can move up and down to change the volume of the buoyancy part 1a.

As shown in Fig. 2, the support cage 1b comprises guide members 7, for instance shaped as guide rails or guide plates, against which the second part 5 can slide when moving up or down. The guide members 7 contribute to maintain a coaxial orientation of the first part 3 and the second part 5.

The diameter of the buoyancy part 1a can typically be between 2 and 10 meters. Its vertical extension can typically be between 10 and 40 meters in the expanded (i.e. non-compressed) state. This will depend on the overall size of the wave power facility 100 and the expected wave conditions.

Fig. 3 depicts the buoyancy part 1a of the wave unit 1 without the framework 5. It will be clear that in some embodiments, the wave unit 1 can be without the framework. The buoyancy part 1a comprises a first part 3 and a second part 5. The first and second parts 3, 5 are both cylindrical or at least have a cylindrical portion, such that the second part 5 extend into the first part 3 in a sliding or telescoping manner. In this way, the buoyancy part 1a can change between a compressed state and an expanded state.

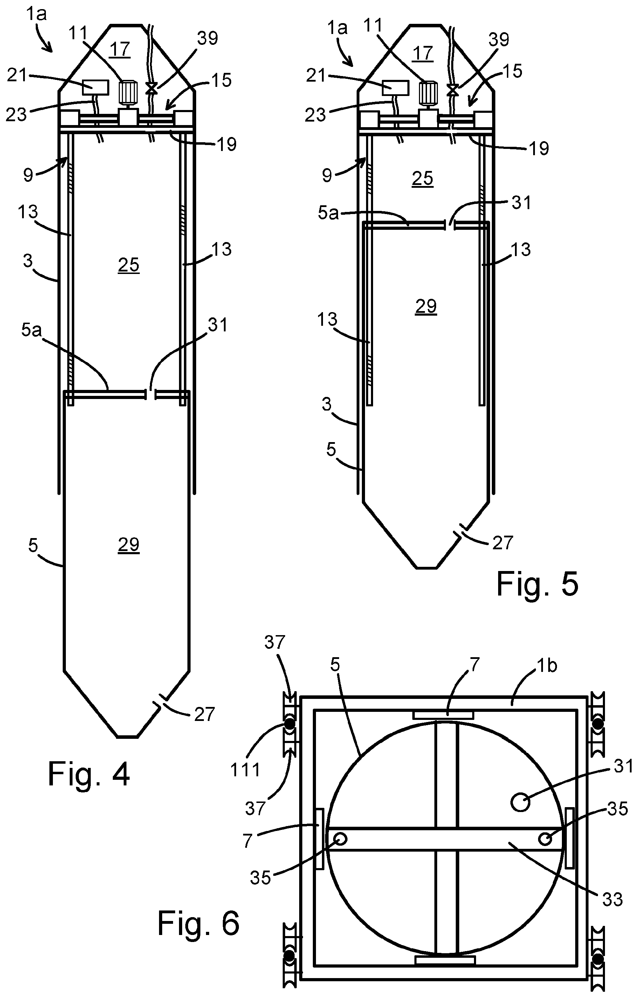

The expanded state and the compressed state are shown with the cross-section side-views of Fig. 4 and Fig. 5, respectively. The second part 5 has an interface portion 5a that interfaces with an adjustment arrangement 9. The adjustment arrangement 9 comprises an adjustment motor 11, which in the shown embodiment is in form of an electric motor. The adjustment motor 11 connects to a pair of threaded rods 13 over a gear assembly 15.

Upon operation of the adjustment motor 11, the threaded rods 13 rotate and moves the interface portion 5a and thus the entire second part 5 in the direction of the threaded rods 13. The threaded rods 13 have a threaded engagement with the interface portion 5a.

In Fig. 5, the second part 5 has been moved into the compressed state, wherein it has been pulled further into the first part 3. By operation of the adjustment motor 11 in the opposite direction, the second part 5 can be moved in the opposite direction, towards the expanded state.

The adjustment motor 11 is arranged in a utility compartment 17 arranged at an upper portion of the first part 3. The utility compartment 17 is dry, meaning that sea water is prevented from accessing it. This makes it suitable for arranging various equipment, such as the said adjustment motor 11.

At the lower part of the utility compartment 17, it is delimited by a compartment floor 19. The threaded rods 13 extend through the compartment floor 19. Advantageously, a seal (not shown) can seal between the threaded rod 13 and the compartment floor 19.

Also shown arranged in the utility compartment 17 is an air pump 21. The air pump 21 communicates with a first compartment 25 of the first part 3. In the shown embodiment, the air pump connects to an airline 23 extending through the compartment floor 19 and into a first compartment 25 of the first part 3. The air pump 21 can be used to control a water level inside the first compartment 25. In particular, the pump 21 can be used to purge water out of the first compartment 25 in situations where water has entered into it. As the skilled reader will appreciate, the wall of the first part 3 can be watertight.

The second part 5 can have an opening, such as opening 27, such that the second compartment 29 of second part 5 communicates with the seawater. This enables draining of seawater out from the second part 5 if the operator wishes to pull the wave unit 1 up and out of the sea. This could typically occur in severe weather conditions.

Alternatively, in severe weather conditions, the operator may also fill the wave unit 1 with more seawater such that it can be pulled down below the sea surface 105 and away from the waves and wind. Filling the wave unit 1 with sea water could be done by operation of the air pump 21 (i.e. by evacuation of air). Alternatively, water can be filled into the wave unit by opening a ventilation valve 39, such as in the compartment floor 19. In this manner, water will flow into the buoyancy part 1a when lowered into the sea. As shown in Fig. 4 and Fig. 5, the ventilation valve 39 is in fluid communication with the external side and the interior side of the buoyancy part 1a.

The interface portion 5a of the second part has a fluid port 31 such that air and water can flow between the first compartment 25 and the second compartment 29.

Fig. 6 depicts the second part 5 with a top view, arranged within the framework 1b. The fluid port 31 may be arranged in a top plate of the interface portion 5a. However, the interface portion 5a may also be open and with merely one or more beams 33 extending across the cylindrical cross section of the second part 5.

The threaded engagement between the interface portion 5a and the threaded rods 13 can be in the form of threaded apertures 35 in the beam 33.

Still referring to Fig. 6, attached to the framework 1b are guide sheaves 37. Pairs of guide sheaves 37 arranged such that each one in a pair is arranged on opposite sides of a guide line 111. The movement of the wave unit 1 is thus confined along the extension of the guide lines 111. It will be appreciated, however, that in some embodiments, the guide lines 111 can be supported in such way that they allow for some horizontal movement of the wave units 1. In this manner, the wave power facility 100 is enabled to harvest power resulting also from this horizontal movement.

## Claims

1. A wave power facility (100) comprising a support structure (101) installed on the seabed (103) and a top structure (107) supported by the support structure, a plurality of wave units (1) arranged at the sea surface (105), wherein the wave units (1) are supported by harvest lines (113) extending between the top structure (107) and the seabed, wherein each of the respective wave units (1) comprises a buoyancy part (1a), **characterized in that** each buoyancy part (1a) is interchangeable between a compressed state and an expanded state.

2. A wave power facility (100) according to claim 1, wherein the buoyancy part (1a) comprises a first part (3) and a second part (5), wherein at least a portion of the first part and the second part have a cylindrical portion, wherein the first or second part is slidably arranged inside the second or first part, respectively.

3. A wave power facility (100) according to claim 1 or claim 2, wherein the respective wave units (1) further comprise a support cage (1b) that encompasses at least a portion of the buoyancy part (1a).

4. A wave power facility (100) according to any one of the preceding claims, wherein the respective wave units (1) comprise an adjustment arrangement (9) with an adjustment motor (11).

5. A wave power facility (100) according to claim 2 and claim 4, wherein the first part (3) comprises a utility compartment (17) at an upper portion, wherein the adjustment motor (11) is arranged inside the utility compartment (17), and wherein the adjustment motor (11) drives one or more threaded rods (13) that interface with the second part (5) with a threaded engagement.

6. A wave power facility (100) according to claim 2 and claim 3, or according to claim 2 and claim 3 and any other of the preceding claims, wherein the support cage (1b) comprises guide members (7) against which the second part (5) abuts in a sliding manner.

7. A wave power facility (100) according to any one of the preceding claims, wherein the respective wave units (1) comprise an air pump (21) with fluid connection to a first compartment (25) inside the wave unit (1).

8. A wave power facility (100) according to claim 2, or according to claim 2 and any other preceding claim, wherein the second part (5) comprises an opening (27) communicating with the exterior of the second part.

9. A method of adjusting the characteristics of the buoyancy part (1a) of a wave power facility (100) according to one of the preceding claims, comprising
i) with an adjustment motor (11), moving a second part (5) of the buoyancy part telescopically with respect to a first part (3) of the buoyancy part, thereby adjusting the volume of the buoyancy part (1a); and/or
ii) with an air pump (21), which is part of the wave unit (1), adjusting the amount of water inside the buoyancy part (1a), by displacing water with air or by displacing air with water.

10. A method of protecting a wave unit (1) of a wave power facility (100) according to one of the claims 1-8 from excessive wave forces, comprising
a) with an air pump (21) that is part of the wave unit (1), reducing the buoyancy of the wave unit (1) by pumping air out from a buoyancy part (1a) and thereby allowing water to flow into the buoyancy part (1a) and, by moving the harvest line (113), moving the wave unit (1) downwards to a distance below the sea level; or
b) opening a ventilation valve (39) to allow water to flow into the buoyancy part (1a) through an opening (27) and, by moving the harvest line (113), moving the wave unit (1) downwards to a distance below the sea level; or
c) with an air pump (21) that is part of the wave unit (1), increasing the buoyancy of the wave unit (1) by pumping air into a buoyancy part (1a) and thereby displacing water out of the buoyancy part (1a) and, by moving the harvest line (113), moving the wave unit (1) upwards to a distance above the sea level; or
d) opening a ventilation valve (39) to allow water to flow out of the buoyancy part (1a) through an opening (27) and, by moving the harvest line (113), moving the wave unit (1) upwards to a distance above the sea level.

## Patentansprüche

1. Wellenenergieanlage (100), umfassend eine auf dem Meeresboden (103) installierte Tragstruktur (101) und eine von der Tragstruktur getragene Oberstruktur (107), eine Vielzahl von an der Meeresoberfläche (105) angeordneten Welleneinheiten (1), wobei die Welleneinheiten (1) von Energiegewinnungsleitungen (113) getragen werden, die sich zwischen der Oberstruktur (107) und dem Meeresboden erstrecken, wobei jede der jeweiligen Welleneinheiten (1) ein Auftriebsteil (1a) umfasst, **dadurch gekennzeichnet, dass** jedes Auftriebsteil (1a) zwischen einem komprimierten Zustand und einem erweiterten Zustand wechselbar ist.

2. Wellenenergieanlage (100) nach Anspruch 1, wobei das Auftriebsteil (1a) einen ersten Teil (3) und einen zweiten Teil (5) umfasst, wobei mindestens ein Abschnitt des ersten Teils und ein Abschnitt des zweiten Teils einen zylindrischen Abschnitt aufweisen, wobei der erste oder zweite Teil jeweils innerhalb des zweiten oder ersten Teils verschiebbar angeordnet ist.

3. Wellenenergieanlage (100) nach Anspruch 1 oder Anspruch 2, wobei die jeweiligen Welleneinheiten (1) weiter einen Stützkäfig (1b) umfassen, der mindestens einen Abschnitt des Auftriebsteils (1a) umgibt.

4. Wellenenergieanlage (100) nach einem der vorstehenden Ansprüche, wobei die jeweiligen Welleneinheiten (1) eine Verstellanordnung (9) mit einem Verstellmotor (11) umfassen.

5. Wellenenergieanlage (100) nach Anspruch 2 und Anspruch 4, wobei der erste Teil (3) ein Technikfach (17) in einem oberen Abschnitt umfasst, wobei der Verstellmotor (11) innerhalb des Technikfaches (17) angeordnet ist, und wobei der Verstellmotor (11) eine oder mehrere Gewindestangen (13) antreibt, die mit dem zweiten Teil (5) in Gewindeeingriff stehen.

6. Wellenenergieanlage (100) nach Anspruch 2 und Anspruch 3, oder nach Anspruch 2 und Anspruch 3 und einem anderen der vorstehenden Ansprüche, wobei der Stützkäfig (1b) Führungselemente (7) umfasst, an denen der zweite Teil (5) gleitend anliegt.

7. Wellenenergieanlage (100) nach einem der vorstehenden Ansprüche, wobei die jeweiligen Welleneinheiten (1) eine Luftpumpe (21) mit Fluidverbindung zu einem ersten Fach (25) innerhalb der Welleneinheit (1) umfassen.

8. Wellenenergieanlage (100) nach Anspruch 2, oder nach Anspruch 2 und einem anderen vorstehenden Anspruch, wobei der zweite Teil (5) eine mit dem Äußeren des zweiten Teils in Verbindung stehende Öffnung (27) umfasst.

9. Verfahren zum Anpassen der Eigenschaften des Auftriebsteils (1a) einer Wellenenergieanlage (100) nach einem der vorstehenden Ansprüche, umfassend
i) teleskopisches Bewegen eines zweiten Teils (5) des Auftriebsteils mit einem Verstellmotor (11) in Bezug auf einen ersten Teil (3) des Auftriebsteils (1a), wodurch das Volumen des Auftriebsteils (1a) angepasst wird; und/oder
ii) Anpassen der Wassermenge innerhalb des Auftriebsteils (1a) mit einer Luftpumpe (21), die Teil der Welleneinheit (1) ist, durch Verdrängen von Wasser mit Luft oder durch Verdrängen von Luft mit Wasser.

10. Verfahren zum Schützen einer Welleneinheit (1) einer Wellenenergieanlage (100) nach einem der Ansprüche 1-8 vor übermäßigen Wellenkräften, umfassend
a) Verringern des Auftriebs der Welleneinheit (1) mittels einer Luftpumpe (21), die Teil der Welleneinheit (1) ist, durch Herauspumpen von Luft aus einem Auftriebsteil (1a) und dadurch Ermöglichen, dass Wasser in das Auftriebsteil (1a) strömt, und, durch Bewegen der Energiegewinnungsleitung (113), Bewegen der Welleneinheit (1) nach unten auf einen Abstand unterhalb des Meeresspiegels; oder
b) Öffnen eines Lüftungsventils (39), um zu ermöglichen, dass Wasser durch eine Öffnung (27) in das Auftriebsteil (1a) strömt, und, durch Bewegen der Energiegewinnungsleitung (113), Bewegen der Welleneinheit (1) nach unten auf einen Abstand unterhalb des Meeresspiegels; oder
c) Erhöhen des Auftriebs der Welleneinheit (1) mittels einer Luftpumpe (21), die Teil der Welleneinheit (1) ist, durch Einpumpen von Luft in ein Auftriebsteil (1a) und dadurch Verdrängen von Wasser aus dem Auftriebsteil (1a) und, durch Bewegen der Energiegewinnungsleitung (113), Bewegen der Welleneinheit (1) nach oben auf einen Abstand oberhalb des Meeresspiegels; oder
d) Öffnen eines Lüftungsventils (39), um zu ermöglichen, dass Wasser durch eine Öffnung (27) aus dem Auftriebsteil (1a) strömt, und, durch Bewegen der Energiegewinnungsleitung (113), Bewegen der Welleneinheit (1) nach oben auf einen Abstand oberhalb des Meeresspiegels.

## Revendications

1. Installation houlomotrice (100) comprenant une structure de support (101) installée sur le fond marin (103) et une structure supérieure (107) supportée par la structure de support, une pluralité d'unités (1) à action des vagues étant disposées à la surface de la mer (105), dans laquelle les unités (1) à action des vagues sont supportées par des lignes de collecte (113) s'étendant entre la structure supérieure (107) et le fond marin, dans laquelle chacune des unités respectives (1) à action des vagues comprend un élément de flottabilité (1a), **caractérisée en ce que** chaque élément de flottabilité (1a) est commutable entre un état comprimé et un état déployé.

2. Installation houlomotrice (100) selon la revendication 1, dans laquelle l'élément de flottabilité (1a) comprend une première partie (3) et une deuxième partie (5), dans laquelle au moins une portion de la première partie et de la deuxième partie présente une portion cylindrique, dans laquelle la première ou la deuxième partie est agencée de manière coulissante à l'intérieur de la deuxième ou de la première partie, respectivement.

3. Installation houlomotrice (100) selon la revendication 1 ou la revendication 2, dans laquelle les unités respectives (1) à action des vagues comprennent en outre une cage de support (1b) qui entoure au moins une portion de l'élément de flottabilité (1a).

4. Installation houlomotrice (100) selon l'une quelconque des revendications précédentes, dans laquelle les unités respectives (1) à action des vagues comprennent un agencement de réglage (9) avec un moteur de réglage (11).

5. Installation houlomotrice (100) selon la revendication 2 et la revendication 4, dans laquelle la première partie (3) comprend un compartiment utilitaire (17) au niveau d'une portion supérieure, dans laquelle le moteur de réglage (11) est agencé à l'intérieur du compartiment utilitaire (17), et dans laquelle le moteur de réglage (11) entraîne une ou plusieurs tiges filetées (13) qui sont en engagement fileté avec la deuxième partie (5).

6. Installation houlomotrice (100) selon la revendication 2 et la revendication 3, ou selon la revendication 2 et la revendication 3 et toute autre des revendications précédentes, dans laquelle la cage de support (1b) comprend des éléments de guidage (7) contre lesquels la deuxième partie (5) vient en butée de manière coulissante.

7. Installation houlomotrice (100) selon l'une quelconque des revendications précédentes, dans laquelle les unités respectives (1) à action des vagues comprennent une pompe à air (21) en communication fluidique avec un premier compartiment (25) à l'intérieur de l'unité (1) à action des vagues.

8. Installation houlomotrice (100) selon la revendication 2, ou selon la revendication 2 et toute autre revendication précédente, dans laquelle la deuxième partie (5) comprend une ouverture (27) communiquant avec l'extérieur de la deuxième partie.

9. Procédé d'ajustement des caractéristiques de l'élément de flottabilité (1a) d'une installation houlomotrice (100) selon l'une des revendications précédentes, comprenant,
i) avec un moteur de réglage (11), le fait de déplacer une deuxième partie (5) de l'élément de flottabilité de manière télescopique par rapport à une première partie (3) de l'élément de flottabilité, permettant ainsi d'ajuster le volume de l'élément de flottabilité (1a) ; et/ou,
ii) avec une pompe à air (21) qui fait partie de l'unité (1) à action des vagues, le fait d'ajuster la quantité d'eau à l'intérieur de l'élément de flottabilité (1a), en déplaçant l'eau avec de l'air ou en déplaçant l'air avec de l'eau.

10. Procédé de protection d'une unité (1) à action des vagues d'une installation houlomotrice (100) selon l'une des revendications 1 à 8 contre des forces de vagues excessives, comprenant,
a) avec une pompe à air (21) qui fait partie de l'unité (1) à action des vagues, le fait de réduire la flottabilité de l'unité (1) à action des vagues en pompant de l'air hors d'un élément de flottabilité (1a) et en permettant ainsi à l'eau de s'écouler dans l'élément de flottabilité (1a) et, en déplaçant la ligne de collecte (113), le fait de déplacer l'unité (1) à action des vagues vers le bas jusqu'à une distance au-dessous du niveau de la mer ; ou
b) le fait d'ouvrir une vanne de ventilation (39) pour permettre à l'eau de s'écouler dans l'élément de flottabilité (1a) à travers une ouverture (27) et, en déplaçant la ligne de collecte (113), le fait de déplacer l'unité (1) à action des vagues vers le bas jusqu'à une distance en dessous du niveau de la mer ; ou,
c) avec une pompe à air (21) qui fait partie de l'unité (1) à action des vagues, le fait d'augmenter la flottabilité de l'unité (1) à action des vagues en pompant l'air dans un élément de flottabilité (1a) et de déplacer ainsi l'eau hors de l'élément de flottabilité (1a) et, en déplaçant la ligne de collecte (113), le fait de déplacer l'unité (1) à action des vagues vers le haut jusqu'à une distance située au-dessus du niveau de la mer ; ou
d) le fait d'ouvrir une vanne de ventilation (39) pour permettre à l'eau de s'écouler hors de l'élément de flottabilité (1a) à travers une ouverture (27) et, en déplaçant la ligne de collecte (113), le fait de déplacer l'unité (1) à action des vagues vers le haut jusqu'à une distance au-dessus du niveau de la mer.
